(19) Europäisches Patentamt
European Patent Office
Office européen des brevets

(11) **EP 4 190 582 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **22020583.5**

(22) Anmeldetag: **29.11.2022**

(51) Internationale Patentklassifikation (IPC):
**B42D 25/328** (2014.01)  **B42D 25/324** (2014.01)
**B42D 25/373** (2014.01)  **B42D 25/425** (2014.01)
**G02B 5/18** (2006.01)  **G02B 5/09** (2006.01)

(52) Gemeinsame Patentklassifikation (CPC):
**B42D 25/328; B42D 25/324; B42D 25/373;**
**B42D 25/425; G02B 5/09; G02B 5/1861**

(54) **SICHERHEITSELEMENT MIT REFLEKTIVEM FLÄCHENBEREICH, DATENTRÄGER UND HERSTELLUNGSVERFAHREN**

SECURITY ELEMENT HAVING REFLECTIVE SURFACE AREA, DATA CARRIER, AND PRODUCTION METHOD

ELEMENT DE SECURITE A ZONE DE SURFACE REFLECHISSANTE, SUPPORT DE DONNEES ET PROCEDE DE FABRICATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.11.2021 DE 102021005911**

(43) Veröffentlichungstag der Anmeldung:
**07.06.2023 Patentblatt 2023/23**

(73) Patentinhaber: **Giesecke+Devrient Currency Technology GmbH**
**81677 München (DE)**

(72) Erfinder: **Lochbihler, Hans**
**80337 München (DE)**

(74) Vertreter: **Giesecke+Devrient IP**
**Prinzregentenstraße 161**
**81677 München (DE)**

(56) Entgegenhaltungen:
EP-A1- 3 184 318        WO-A1-2016/141422
WO-A1-2018/166653    WO-A1-2019/180461
WO-A1-2021/063126    WO-A1-97/21121
DE-A1- 102012 110 630    FR-A1- 3 019 497

**Beschreibung**

Die Erfindung betrifft ein Sicherheitselement zur Absicherung von Wertgegenständen, mit einem reflektiven Flächenbereich, dessen Ausdehnung eine x-y-Ebene definiert und der bei Betrachtung in reflektiertem Licht eine mehrfarbige dreidimensionale Darstellung erzeugt. Die Erfindung betrifft auch einen Datenträger mit einem solchen Sicherheitselement sowie ein Herstellungsverfahren für ein solches Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können.

In der Druckschrift WO 2014/060089 A2 wird die Erzeugung von dreidimensionalen Wölbeffekten bei Sicherheitselementen mit Hilfe von Mikrospiegeln vorgeschlagen. Die Mikrospiegelstrukturen können beispielsweise durch Prägeverfahren einfach von einem Master repliziert werden. Die geprägten Reliefstrukturen werden metallisch beschichtet und in Kunststoff eingebettet. Ihr Erscheinungsbild ist bei einer metallischen Beschichtung allerdings in der Regel nur einfarbig.

Um auch farbige Darstellungen zu erzeugen, können die Mikrospiegel anstatt mit einer einfachen Metallisierung mit einer farbkippenden Beschichtung versehen werden, die eine Farbabhängigkeit der Struktur in Abhängigkeit vom Betrachtungswinkel erzeugt. Eine lateral unterschiedliche farbliche Ausgestaltung von Motiven ist auf diese Weise allerdings nicht möglich.

Bei einem anderen Ansatz werden metallische Nanostrukturen eingesetzt, die eine farbige Erscheinung in Reflexion oder Transmission zeigen. Insbesondere können Subwellenlängengitter zur Erzeugung von Farbeffekten bei feinster Ortsauflösung verwendet werden. In der Druckschrift DE 10 2011 101 635 A1 ist hierzu eine Prägestruktur mit einer zweidimensional periodischen Nanostruktur beschrieben, die Farben in Reflexion und in Transmission zeigt. Die Prägestruktur muss dabei lediglich mit einer Aluminiumschicht bedampft werden. Mit solchen Nanostrukturen kann nicht nur eine globale Farbgebung, sondern es können auch bereichsweise unterschiedliche Farben in einem Motiv erzeugt werden.

Für eine Serienproduktion müssen die eingesetzten Nanostrukturen mit hoher Strukturtreue bei geringer Defektrate abformbar sein. Die bisher für Farbeffekte eingesetzten Nanostrukturen haben allerdings typischerweise ein Aspektverhältnis größer als 1 und Perioden kleiner als 300 nm. Der Prägeprozess zur defektfreien Vervielfältigung solcher Strukturen ist technisch sehr anspruchsvoll und aufwendig.

Die Druckschrift EP 3 184 318 A 1 beschreibt ein optisch variables Sicherheitselement mit einem Träger mit einem reflektiven Flächenbereich, wobei der reflektive Flächenbereich teildurchlässig ist und eine Beugungsstruktur aufweist, die durch eine additive Überlagerung einer makroskopisch oder mikroskopisch feinen Reliefstruktur und einem mikroskopisch feinen Perforationsmuster gebildet ist.

Aus der Druckschrift WO 2019/180461 A1 ist ein optisch variables Sicherheitselement bekannt, das eine erste Schicht mit einer ersten Oberfläche, eine Anordnung von Bildbereichen auf der ersten Oberfläche und eine diffraktive, einen optisch variablen Effekt erzeugende Struktur umfasst, die in oder auf der ersten Oberfläche bereitgestellt ist.

Die Druckschrift WO 97/21121 A1 betrifft eine diffraktive Struktur mit einem im Wesentlichen planaren Substrat, wobei in oder auf dem Substrat ein Satz Facetten ausgebildet ist und die Ebene oder Ebenen, in denen die Facetten liegen, in einem von Null verschiedenen Winkel zur Ebene des Substrats angeordnet sind. Auf jeder Facette ist ein Beugungsgitter ausgebildet.

Die Druckschrift FR 3 019 497 A1 befasst sich mit einer optischen Sicherheitskomponente, die aus einer Struktur besteht, die in eine Schicht aus einem Material mit einem ersten Brechungsindex geprägt ist, einer dünnen Schicht aus einem dielektrischen Material mit einem zweiten Brechungsindex und einer auf der Struktur abgeschiedenen Schicht aus einem Material mit einem dritten Brechungsindex, wodurch die mit der dünnen Schicht beschichtete Struktur eingekapselt ist. Die Struktur weist ein erstes Muster auf, das durch ein zweites Muster moduliert ist, wobei das erste Muster ein Basrelief mit einem ersten Satz von Facetten umfasst und das zweite Muster ein Subwellenlängengitter bildet.

In der Druckschrift WO 2016/141422 A1 ist eine optische Vorrichtung zur Authentifizierung von Wertgegenständen beschrieben, die eine erste diffraktive Struktur zum Erzeugen eines ersten diffraktiven Bildes, eine zweite diffraktive Struktur zum Erzeugen eines zweiten diffraktiven Bildes und eine nicht-diffraktive Struktur umfasst.

Die Druckschrift WO 2018/166653 A1 befasst sich mit einem Sicherheitselement mit reflektiven Farbfiltereigenschaften, das eine Profilstruktur aufweist, die Erhebungen über einer Grundfläche hat und eine metallische Oberseite aufweist. Die Erhebungen haben eine zur Grundfläche parallele Deckfläche und sind im Querschnitt gesehen jeweils mindestens einstufig gebildet und hinsichtlich Lage und/oder Ausdehnung auf der Grundfläche quasistatistisch verteilt.

Die Druckschrift DE 10 2012 110 630 A1 beschreibt einen Mehrschichtkörper mit einer Metallschicht. In einer zur Oberseite des Mehrschichtkörpers weisenden ersten Oberfläche der Metallschicht ist zumindest bereichsweise ein optisch aktives Oberflächenrelief abgeformt, das von einer ersten Reliefstruktur gebildet ist. Die erste Reliefstruktur weist in zumindest einer Richtung eine Abfolge von Erhebungen und Vertiefungen auf, deren Erhebungen mit einer Periode aufeinander abfolgen, welche kleiner als eine Wellenlänge des sichtbaren Lichtes ist.

Aus der Druckschrift WO 2021/063126 A1 ist ferner ein optisches Fälschungsschutzelement bekannt, das ein Substrat umfasst, mehrere reflektierende Facetten, die auf dem Substrat ausgebildet sind und verwendet werden, um an einer Position grafische und strukturelle Informationen darzustellen, sowie eine Farbmodulationsstruktur, die auf den reflektierenden Facetten ausgebildet ist und zum Modulieren der Farbe des von den Facetten reflektierten Lichts verwendet wird.

Weitere Beispiele für herkömmliche Sicherheitselemente sind aus den Dokumenten WO2019/180461-A1 und WO2021/063126-A1 bekannt.

Ausgehend davon liegt der Erfindung die Aufgabe zugrunde, ein Sicherheitselement der eingangs genannten Art anzugeben, dass auch in dem im Sicherheitsbereich geforderten großtechnischen Maßstab einfach und kostengünstig herstellbar ist und dabei neben hoher Fälschungssicherheit ein attraktives mehrfarbiges, dreidimensionales Erscheinungsbild aufweist.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Sicherheitselement vorgesehen, dass der reflektive Flächenbereich eine Grobstruktur für die Erzeugung der dreidimensionalen Darstellung und eine die Grobstruktur überlagernde Feinstruktur für die Erzeugung des mehrfarbigen Erscheinungsbilds der Darstellung umfasst.

Die Grobstruktur umfasst dabei eine Vielzahl von gerichtet reflektierenden Facetten, die so orientiert sind, dass der reflektive Flächenbereich für einen Betrachter in Form der dreidimensionalen Darstellung mit einer gegenüber seiner tatsächlichen Raumform vor- und/ oder zurückspringenden Oberfläche wahrnehmbar ist.

Die Feinstruktur ist durch eine treppenförmige Bragg-Interferenzstruktur mit Treppenstufen gebildet, auf denen eine reflektierende oder reflexionserhöhende Beschichtung ausgebildet ist, wobei die Treppenstufen den gerichtet reflektierenden Facetten der Grobstruktur überlagert sind und bei Betrachtung durch Bragg-Interferenz an benachbarten Treppenstufen eine Farbwirkung erzeugen. Dabei erzeugt eine bereichsweise unterschiedliche Höhe der Treppenstufen in dem reflektiven Flächenbereich bereichsweise unterschiedliche Farben der dreidimensionalen Darstellung.

In einer vorteilhaften Ausgestaltung sind die Grobstruktur und die Feinstruktur des reflektiven Flächenbereichs zwischen transparente, insbesondere transparente dielektrische Schichten eingebettet. Die dielektrischen Schichten weisen vorteilhaft einen Brechungsindex zwischen 1,3 und 1,7, insbesondere von etwa 1,5 auf. Der Brechungsindex der Schichten, in die die Grobstruktur und die Feinstruktur eingebettet sind, ist vorteilhaft im Wesentlichen gleich und beträgt beispielsweise etwa 1,5.

Die Facetten der Grobstruktur weisen bevorzugt in zumindest einer Raumrichtung der x-y-Ebene eine Weite zwischen 2 $\mu$m und 30 $\mu$m, insbesondere zwischen 4 $\mu$m und 10 $\mu$m auf. Vorteilhaft weisen die Facetten sogar in beiden Raumrichtungen der x-y-Ebene eine Weite in den genannten Bereichen auf, wobei die Weite in den beiden Raumrichtungen nicht gleich sein muss. Der Abstand benachbarter Facetten entspricht in der Regel der Weite der Facetten. Der Abstand benachbarter Facetten kann dabei periodisch sein, besonders vorteilhaft sind die Facetten der Grobstruktur allerdings aperiodisch angeordnet, um unerwünschte Gitterbeugungseffekte zu vermeiden.

Die der Grobstruktur überlagerten Treppenstufen weisen innerhalb jeder der Facetten vorteilhaft gleiche Höhe auf, um eine leuchtstarke und klar definierte Farbwirkung zu erzeugen. Wie weiter unten genauer erläutert, ist die Farbwirkung einer Bragg-Interferenzstruktur im Wesentlichen durch die Höhe der Treppenstufen bestimmt, so dass Teilbereiche mit unterschiedlicher Farbwirkung im Allgemeinen Treppenstufen unterschiedlicher Höhe enthalten.

In einer vorteilhaften Ausgestaltung ist den Facetten der Grobstruktur in den farbigen Bereichen eine Bragg-Interferenzstruktur mit 2 bis 20 Treppenstufen, insbesondere 2 bis 10 Treppenstufen überlagert.

Die Höhe der Treppenstufen liegt bevorzugt zwischen 100 nm und 600 nm, besonders bevorzugt zwischen 125 nm und 520 nm und insbesondere zwischen 150 nm und 425 nm.

In einer vorteilhaften Ausgestaltung ist vorgesehen, dass die Höhe der Treppenstufen bei flacheren Facetten mit einer Neigung unterhalb eines vorgegebenen Schwellwerts unterhalb von 275 nm liegt, und bei steileren Facetten oberhalb des Schwellwerts oberhalb von 275 nm liegt. Auf diese Weise kann die erforderliche Anzahl an Treppenstufen auch bei steileren Facetten gering gehalten werden. Der vorgegebene Schwellwert der Neigung der Facetten hängt dabei unter anderem von der gewünschten Farbe ab.

Wie weiter unten genauer erläutert, können bei geeigneter Auslegung mit größeren Stufenhöhen durch konstruktive Interferenz höherer Ordnung dieselben Farbwirkungen erzeugt werden wie mit niedrigeren Stufenhöhen durch konstruktive Interferenz erster Ordnung. Dabei hat der Erfinder erkannt, dass sich bei einbettenden Dielektrika mit einem Brechungsindex von $n \approx 1,5$ alle benötigten Farben mit Stufenhöhen unterhalb von 275 nm durch konstruktive Interferenz erster Ordnung erhalten lassen, während sich dieselben Farben mit Stufenhöhen oberhalb von 275 nm durch konstruktive Interferenz zweiter oder höherer Ordnung erhalten lassen. Dieselben Farbwirkungen können daher bei flacheren Facetten durch kleinere Stufenhöhen und bei steileren Facetten durch größere Stufenhöhen erhalten werden, so dass die Anzahl der benötigen Stufen sich bei flacheren und steileren Facetten nicht wesentlich unterscheidet.

Die Treppenstufen schließen mit der z-Achse vorteilhaft einen Winkel $\alpha$ zwischen 85° und 120° ein, insbesondere einen Winkel $\alpha$ ungleich 90°. Insbesondere kann der Winkel $\alpha$ mit Vorteil zwischen 100° und 110° liegen. Die Wahl des Winkels $\alpha$ ungleich 90° bietet einen zusätzlichen Freiheitsgrad bei der Einstellung der Farbintensität.

Die reflektierende oder reflexionserhöhende Beschichtung kann mit besonderem Vorteil eine Metallisierung sein, die beispielsweise aufgedampft ist. Die Metallisierung der Treppenstufen besteht vorteilhaft aus Al, Ag, Au, Ni, Cr oder einer Legierung dieser Metalle. Die Dicke der Metallisierung liegt zweckmäßig zwischen 8 nm und 150 nm, insbesondere zwischen 15 nm und 60 nm.

Anstelle einer Metallisierung kann die reflektierende oder reflexionserhöhende Beschichtung der Treppenstufen auch durch eine Beschichtung mit einem Material mit hohem Brechungsindex gebildet sein. Als hochbrechendes Beschichtungsmaterial kann insbesondere ZnS, ZnO, ZnSe, $SiN_x$, $SiO_x$, $Cr_2O_3$, $Nb_2O_5$, $Ta_2O_5$, $Ti_xO_x$ oder $ZrO_2$ verwendet werden. Mit besonderem Vorteil ist das Sicherheitselement dabei mit einem absorbierenden Untergrund ausgestattet. Die mit der hochbrechenden Beschichtung ausgestatteten Strukturen zeigen dann bei Betrachtung optische Effekte, die denen von Strukturen mit Beschichtungen aus flüssigkristallinem Material ähnlich sind, weisen jedoch diesen gegenüber den Vorteil auf, dass der Farbton durch die Treppenstufen definiert ist und lateral frei gewählt werden kann.

Die reflektierende oder reflexionserhöhende Beschichtung kann alternativ auch aus einem Halbmetall, insbesondere aus Si oder Ge gebildet sein.

Die Breite der Treppenstufen liegt bevorzugt zwischen 400 nm und 2 $\mu$m, insbesondere zwischen 600 nm und 1 $\mu$m. Innerhalb jeder der Facetten ist die Breite der Treppenstufen vorzugsweise gleich, um eine effektive Lichtinterferenz und damit eine hohe Helligkeit der Reflexion zu gewährleisten.

Mit Vorteil ist vorgesehen, dass die treppenförmige Bragg-Interferenzstruktur in den farbigen Bereichen des reflektiven Flächenbereichs eine im LCh-Farbraum angegebene Buntheit C* von mehr als 40, insbesondere von mehr als 60 oder sogar mehr als 80 erzeugt. So hohe Werte für die Buntheit können durch geeignete Wahl der Höhe der Treppenstufen erreicht werden und liefern einen Farbeindruck mit hoher Farbsättigung.

Die von dem reflektiven Flächenbereich erzeugte Darstellung weist vorzugsweise drei oder mehr, insbesondere fünf oder mehr verschiedene Buntfarben auf. Die Darstellung kann insbesondere eine Echtfarbdarstellung sein, also ein Motiv mit einer Mehrzahl von Echtfarben darstellen. Als Echtfarben werden dabei allgemein Mischfarben aus bis zu drei Grundfarben, wie etwa Rot, Grün und Blau bezeichnet. Die mehrfarbigen Darstellungen können vorteilhaft auch Bewegungseffekte aufweisen.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, ein Siegel, eine Steuerbanderole, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung stellt schließlich auch ein Verfahren zur Herstellung eines Sicherheitselements der beschriebenen Art bereit, bei dem

- ein reflektiver Flächenbereich mit einer Grobstruktur für die Erzeugung der dreidimensionalen Darstellung und einer die Grobstruktur überlagernden Feinstruktur für die Erzeugung des mehrfarbigen Erscheinungsbilds der Darstellung erzeugt wird,

- die Grobstruktur mit einer Vielzahl von gerichtet reflektierenden Facetten ausgebildet wird, die so orientiert werden, dass der reflektive Flächenbereich für einen Betrachter in Form der dreidimensionalen Darstellung mit einer gegenüber seiner tatsächlichen Raumform vor- und/oder zurückspringenden Oberfläche wahrnehmbar ist, und

- die Feinstruktur durch eine treppenförmige Bragg-Interferenzstruktur mit Treppenstufen gebildet wird, die den gerichtet reflektierenden Facetten der Grobstruktur überlagert werden und die bei Betrachtung durch Bragg-Interferenz an benachbarten Treppenstufen eine Farbwirkung erzeugen, wobei die Treppenstufen bereichsweise mit unterschiedlicher Höhe ausgebildet werden, um in dem reflektiven Flächenbereich bereichsweise unterschiedliche Farben der dreidimensionalen Darstellung zu erzeugen, und wobei auf den Treppenstufen eine reflektierende oder reflexionserhöhende Beschichtung ausgebildet wird.

Die vorgeschlagenen Sicherheitselemente basieren auf einer neuartigen Überlagerung einer Grobstruktur aus gerichtet reflektierenden Facetten und einer Feinstruktur aus treppenförmigen Bragg-Interferenzstrukturen. Die Sicherheitselemente zeigen bei Betrachtung räumliche Effekte und erscheinen aufgrund der überlagerten Bragg-Interferenzstruktur farbig. Durch die Wahl der Stufenhöhe können gezielt unterschiedliche Farben innerhalb der 3D-Darstellung erzeugt werden. Das Replizieren einer Prägestruktur mit einer solchen Grob- und Feinstruktur ist wegen des niedrigen Aspektverhältnisses der Bragg-Interferenzstrukturen einfach und kostengünstig zu bewerkstelligen.

Die Farbgebung basiert auf Bragg-Interferenz an unterschiedlich hohen Treppenstufen, so dass sich die Farbigkeit bereits bei einer einfachen Metallbeschichtung, beispielsweise aus Aluminium, einstellt. Eine Serienproduktion ist daher wesentlich kostengünstiger als bei Strukturen, die für ihre Farbwirkung eine Multilagenbeschichtung, wie etwa eine farbkippende Mehrlagenbeschichtung benötigen. Darüber hinaus können die farbigen Motive mit den vorgeschlagenen Strukturen mit höchster Auflösung realisiert werden.

Die beschriebenen Facetten und Bragg-Interferenzstrukturen können auch ohne Weiteres mit anderen bekannten Prägestrukturen, wie etwa Hologrammen oder anderen Nanostrukturen kombiniert und bereits auf einem Prägestempel mit hoher Präzision nebeneinander angeordnet werden. Dadurch können Strukturen mit unterschiedlichen optischen Effekten im perfekten Register zueinander realisiert werden, und beispielsweise räumliche Effekte, Bewegungseffekte und mehrfarbige Motive in einem einzigen Sicherheitselement vereinigt werden.

Beispielsweise können durch eine Kombination der hier erläuterten Strukturen mit lichtabsorbierenden Prägestrukturen, z.B. Mottenaugenstrukturen, kontrastreiche Motive und Echtfarbenbilder hergestellt werden. Insbesondere kann der Kontrast bei pixelierten Echtfarbenbildern, welche durch die Bragg-Interferenz-Strukturen gebildet werden, durch die Wahl des Flächenanteils der lichtabsorbierenden Strukturen in den jeweiligen Pixeln eingestellt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1       schematisch eine Banknote, die mit zwei Sicherheitselementen nach Ausführungsbeispielen der Erfindung versehen ist,

Fig. 2       schematisch einen Ausschnitt eines erfindungsgemäßen Sicherheitselements im Querschnitt und über dem Sicherheitselement eine perspektivische Ansicht der vom Betrachter bei der Betrachtung des Sicherheitselements wahrgenommenen, dreidimensionalen Darstellung,

Fig. 3       zur Illustration des Prinzips der Farberzeugung in (a) eine genauere Darstellung der Reliefstruktur des Sicherheitselements der Fig. 2 in zwei Teilbereichen, in denen die nachgestellte Oberfläche eine unterschiedliche Neigung aufweist, in denen aber bei Betrachtung der gleiche Farbeindruck erzeugt wird, und in (b) eine Gegenüberstellung zweier Teilbereiche, in denen die nachgestellte Oberfläche dieselbe Neigung aufweist, aber mit unterschiedlichem Farbeindruck erscheint,

Fig. 4       eine Aufsicht auf eine nachzustellende gewölbte Oberfläche mit Höhenlinien, und an drei Stellen exemplarisch die Orientierung der Facetten anhand des lokalen Gradienten der Oberfläche,

Fig. 5       die Lage der Treppenstufen von Bragg-Interferenzstrukturen in einem Sicherheitselement, welche durch eine metallische Beschichtung in der Umgebung eines homogenen Dielektrikums gebildet werden,

Fig. 6       in (a) und (b) den spektralen Verlauf der Reflexion an 4-stufigen Treppenstrukturen mit Treppenstufen unterschiedlicher Stufenhöhe,

Fig. 7       ein CIE-Farbdiagramm mit den Farborten der Reflexionsspektren der Fig. 6,

Fig. 8       die Farbeigenschaften treppenförmiger Bragg-Interferenz-strukturen mit 4 Treppenstufen, wobei (a) die Helligkeit $L^*$, (b) die Buntheit $C^*$ und (c) den Farbton $h°$ im LCh-Farbraum in Abhängigkeit von der Ganghöhe h einer Facette zeigt, und (d) die Änderung des Farborts im CIE-Farbdiagramm mit zunehmender Ganghöhe zeigt,

Fig. 9       Reflexionsspektren von Bragg-Treppenstrukturen mit Parametern wie in Fig. 6(b), allerdings mit einer geringeren Weite,

Fig. 10      in (a) und (b) den spektralen Verlauf der Reflexion an 9-stufigen Treppenstrukturen mit unterschiedlicher Stufenhöhe und unterschiedlicher Ordnung der konstruktiven Interferenz,

Fig. 11      in (a) und (b) den spektralen Verlauf der Reflexion an Treppenstrukturen für unterschiedliche Dicken der Metallbeschichtung,

Fig. 12      den spektralen Verlauf der Reflexion für unterschiedliche Lichteinfallswinkel,

Fig. 13 die Winkelabhängigkeit des Farbeindrucks, wobei (a) im CIE-Farbdiagramm die Farborte bei einem Lichteinfallswinkel von $\theta = 0°$ und $\theta = 20°$ vergleicht, und (b) die Helligkeit L*, (c) die Buntheit C*, und (d) den Farbton h° für die beiden Lichteinfallswinkel im LCh-Farbraum vergleicht, und

Fig. 14 in (a) und (b) schematisch Zwischenschritte bei der Herstellung erfindungsgemäßer Sicherheitselemente.

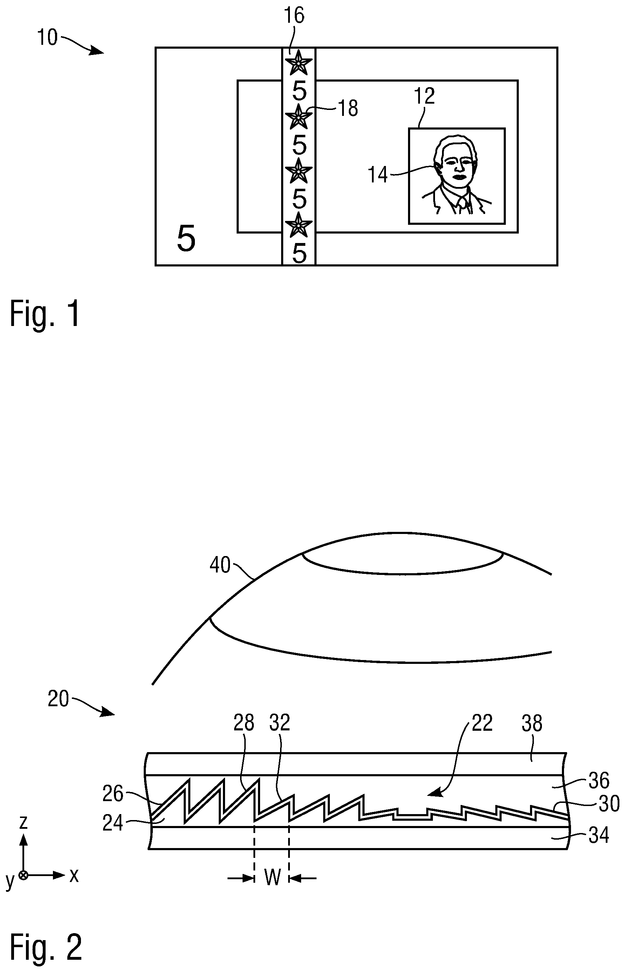

Die Erfindung wird nun am Beispiel von Sicherheitselementen für Banknoten erläutert. Figur 1 zeigt dazu eine schematische Darstellung einer Banknote 10, die mit zwei Sicherheitselementen 12, 16 nach Ausführungsbeispielen der Erfindung versehen ist. Das erste Sicherheitselement stellt ein aufgeklebtes Transferelement 12 dar, das bei Betrachtung eine mehrfarbige, dreidimensional erscheinende Darstellung 14 in Form eines sich scheinbar aus der Ebene der Banknote herauswölbenden Echtfarb-Portraits zeigt.

Das zweite Sicherheitselement stellt einen Sicherheitsfaden 16 dar, der entlang seiner Länge abwechselnd die Denomination der Banknote 10 und als graphisches Motiv einen mehrfarbigen, sich scheinbar aus der Ebene der Banknote herauswölbenden Stern 18 zeigt. Es versteht sich allerdings, dass die Erfindung nicht auf die beispielhaft gezeigten Motive oder auf Transferelemente und Sicherheitsfäden bei Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen.

Erfindungsgemäße Sicherheitselemente können auch genutzt werden, um vollflächige Motive auf Sicherheitsdokumenten z.B. bei Banknoten zu realisieren. Dieser Ansatz ist in der Druckschrift DE 10 2014 018 551 A1 näher erläutert. Durch den Einsatz von Strukturen der hier beschriebenen Art können Pigmentfarben bei der Herstellung von Sicherheitsdokumenten vermieden und die Anzahl der Prozessschritte bei der Herstellung solcher Sicherheitsdokumente reduziert werden.

Das Zustandekommen der mehrfarbigen dreidimensionalen Darstellung in erfindungsgemäßen Sicherheitselementen wird nun mit Bezug auf die Figuren 2 bis 4 näher erläutert. Zunächst illustriert Fig. 2 das grundsätzliche Zustandekommen des dreidimensionalen Erscheinungsbilds bei einem erfindungsgemäßen Sicherheitselement 20. Die Figur zeigt schematisch einen Ausschnitt des Sicherheitselements 20 im Querschnitt und über dem Sicherheitselement eine perspektivische Ansicht 40 der bei der Betrachtung des Sicherheitselements wahrgenommenen dreidimensionalen Darstellung.

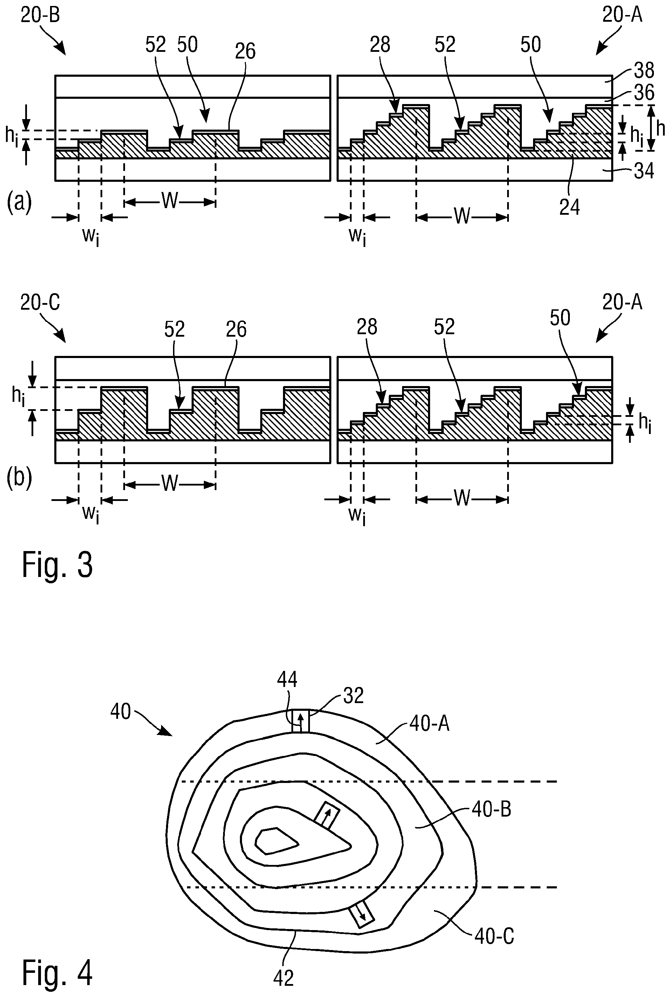

Das Sicherheitselement 20 enthält einen reflektiven Flächenbereich 22 mit einer in einen Prägelack 24 eingeprägten und mit einer reflektierenden oder reflexionserhöhenden Beschichtung, insbesondere einer Metallisierung 26 versehenen Reliefstruktur 28. Die Reliefstruktur 28 stellt eine Überlagerung einer Grobstruktur 30 mit einer farberzeugenden Feinstruktur 50 (Fig. 3) dar, für die Erzeugung des dreidimensionalen Erscheinungsbilds ist allerdings im Wesentlichen nur die Grobstruktur verantwortlich, so dass nur diese in der vereinfachten Darstellung der Fig. 2 dargestellt ist.

Die Ausdehnung des reflektiven Flächenbereichs 22 definiert eine x-y-Ebene, die darauf senkrecht stehende Richtung wird als z-Richtung bezeichnet. Das Sicherheitselement 20 ist auf Betrachtung aus der positiven z-Richtung ausgelegt, wobei ein typischer Betrachtungsabstand etwa 30 cm beträgt. Die Grobstruktur 30 enthält eine Vielzahl gerichtet reflektierender Facetten 32, die jeweils so orientiert sind, dass der reflektive Flächenbereich 22 für einen Betrachter in Form der gewünschten dreidimensionalen Darstellung 40, beispielsweise dem Portrait 14 oder den herausgewölbten Sternen 18 der Fig. 1 mit einer gegenüber der tatsächlichen Raumform des Flächenbereichs 22 vor- und/ oder zurückspringenden Oberfläche wahrnehmbar ist.

Die metallisierte Prägelackschicht 24, 26 ist in dielektrische Schichten 34, 36, 38 eingebettet, deren Brechungsindices alle gleich sein können und typischerweise etwa n=1,5 betragen. Wie in Fig. 2 sichtbar, ist in dem Sicherheitselement 20 nicht die vom Betrachter wahrgenommene gewölbte Fläche 40 selbst ausgebildet, sondern eine Vielzahl reflektiver Facetten 32, die durch ihre Orientierung das Reflexionsverhalten der gewölbten Fläche 40 imitieren, aber eine wesentlich geringere Ganghöhe als die imitierte gewölbte Fläche aufweisen. Da die reflektiven Facetten 32 wie kleine Mikrospiegel wirken, wird die Facettenanordnung im Rahmen dieser Beschreibung oft auch als Mikrospiegelanordnung und werden die Facetten als Mikrospiegel bezeichnet.

Die reflektiven Facetten 32 sind beispielsweise mit rechteckigem Umriss und einer Weite W zwischen 4 $\mu$m und 10 $\mu$m ausgebildet. Jede Facette 32 der Grobstruktur 30 bildet so ein ebenes Flächenelement, das gegen die x-y-Ebene um einen bestimmten Winkel geneigt ist, wobei der Neigungswinkel gerade der lokalen Steigung der imitierten Fläche 40 entspricht. Die Ganghöhe h der Facetten 32, also ihr Höhenunterschied bezogen auf die x-y-Ebene, liegt zwischen 0 $\mu$m und 10 $\mu$m, so dass die tatsächlichen Höhenunterschiede innerhalb des reflektiven Flächenbereichs 22 mit bloßem Auge nicht wahrnehmbar sind.

Die Weiten und die Ganghöhen der Facetten 32 der Grobstruktur können auf verschiedene Weise gewählt werden. Beispielsweise kann eine gewünschte Ganghöhe h vorgegeben werden und die Weite W der Facetten 32 jeweils so gewählt werden, dass in Kombination mit der vorgegebenen Ganghöhe die gewünschte Neigung der Facette 32 erzeugt wird. Für die Kombination mit den nachfolgend genauer beschriebenen farberzeugenden Feinstrukturen hat es sich als vorteilhaft herausgestellt, wenn die Weite W der Facetten vorgegeben wird und die Ganghöhe h jeweils so gewählt wird, dass die gewünschte Neigung einer Facette 32 erzeugt wird. Die Weiten W der Facetten werden dabei im Wesentlichen gleich groß gewählt. Mit Vorteil variieren allerdings die Abstände der Facetten in unregelmäßiger Weise etwas, um unerwünschte Gitterbeugungseffekte durch eine vollkommen regelmäßige Anordnung zu vermeiden.

Zumindest die am stärksten geneigten Facetten weisen im Profil eine Ganghöhe h auf, die deutlich größer als die Wellenlänge ist (> 1 $\mu$m). Die Neigungen der steilsten Facetten (d. h. der Facetten mit der gegenüber der x-y-Ebene größten Neigung) liegen typischerweise im Bereich von 20°, in speziellen Ausgestaltungen sogar im Bereich von 10°.

Um nicht nur eine dreidimensionale Darstellung, sondern die erfindungsgemäßen mehrfarbigen dreidimensionalen Darstellungen zu erzeugen, sind die Grobstrukturen 30 mit farberzeugenden Feinstrukturen in Form treppenförmiger Bragg-Interferenzstrukturen überlagert. Zur Illustration des Prinzips der Farberzeugung ist die Reliefstruktur 28 des Sicherheitselements 20 in Fig. 3(a) in zwei Teilbereichen 20-A, 20-B genauer dargestellt, in denen die nachgestellte Oberfläche 40 und damit auch die Facetten 32 eine unterschiedliche Neigung aufweisen, in denen aber bei Betrachtung der gleiche Farbeindruck erzeugt wird.

Die der Grobstruktur der Facetten 32 überlagerte Feinstruktur 50 besteht im Ausführungsbeispiel aus einer Anordnung aus metallisierten Treppenstufen 52, die jeweils eine Breite $w_i$ und eine Höhe $h_i$ aufweisen. Für jede Facette 32 ergibt die Summe der Treppenbreiten $w_i$ der dieser Facette überlagerten Treppenstufen die Weite W der Facette und die Summe der Treppenhöhen $h_i$ die Ganghöhe h der Facette.

Die Farbwirkung der Teilbereiche 20-A, 20-B wird durch Bragg-Interferenz des einfallenden Lichts an benachbarten Treppenstufen erzeugt und ist im Wesentlichen durch die Höhe $h_i$ der Treppenstufen bestimmt. Genauer tritt konstruktive Interferenz an benachbarten Treppenstufen 52 immer dann auf, wenn die Lichtwellenlänge $\lambda$ die Bedingung

$$\lambda/n = 2\,h_i/m * \sin(90° - \theta) \hspace{4cm} \text{(IB)}$$

erfüllt, wobei n den Brechungsindex des Mediums, $\theta$ den Einfallswinkel des Lichts zur z-Richtung und m eine ganze Zahl größer oder gleich 1 darstellt.

Die vorstehende Beziehung beruht auf einem Modell der Wellenoptik für die Interferenz, das für hinreichende große Treppenstufen gilt. Für zunehmend kleine Dimensionen im Subwellenlängenbereich erfolgt die Beugung nicht mehr nach diesem klassischen Modell und muss anhand der Maxwell-Gleichungen berechnet werden. So wirken die Treppenstufen in dem Fall, dass die Breite der einzelnen Treppen im Subwellenlängenbereich ($\lambda$ < 400 nm) liegt, in Bezug auf einfallendes Licht nicht mehr wie einzelne Spiegelflächen.

Soll ein Teilbereich bei senkrecht einfallendem Licht ($\theta$ = 0°) eine Farbe mit Schwerpunktswellenlänge $\lambda$ reflektieren, so werden die Treppenstufen in diesem Teilbereich entsprechend Beziehung (IB) mit einer Höhe $h_i$ ausgebildet, die im Wesentlichen der halben Lichtwellenlänge im Medium, $\lambda/(2n)$, oder einem ganzzahligen Vielfachen dieser Wellenlänge, also $m*\lambda/(2n)$, entspricht. Vorteilhaft werden die Treppenstufen für m=1 oder m=2 ausgelegt.

Die Breiten $w_i$ der Treppenstufen sind dabei zweckmäßig so gewählt, dass benachbarte Flächenanteile im Wesentlichen gleich groß sind, da dadurch eine bestmögliche Lichtinterferenz an benachbarten Stufen gewährleistet ist. Die Breiten $w_i$ der Treppenstufen einer Facette sind daher insbesondere gleich groß. Treppenstufen, deren Höhe $h_i$ der halben Lichtwellenlänge im Medium entsprechen (also m=1 in Beziehung (IB)), werden mit Vorteil für flachere Facetten 32 eingesetzt, während Treppenstufen, deren Höhe $h_i$ einem Mehrfachen der halben Lichtwellenlänge im Medium (insbesondere m=2 in Beziehung (IB)) entsprechen, mit Vorteil für steilere Facetten 32 eingesetzt werden, da beispielsweise bei m=2 und gleicher Treppenbreite $w_i$ pro Treppenstufe eine doppelt so große vertikale Distanz überbrückt wird wie bei Treppenstufen mit m=1.

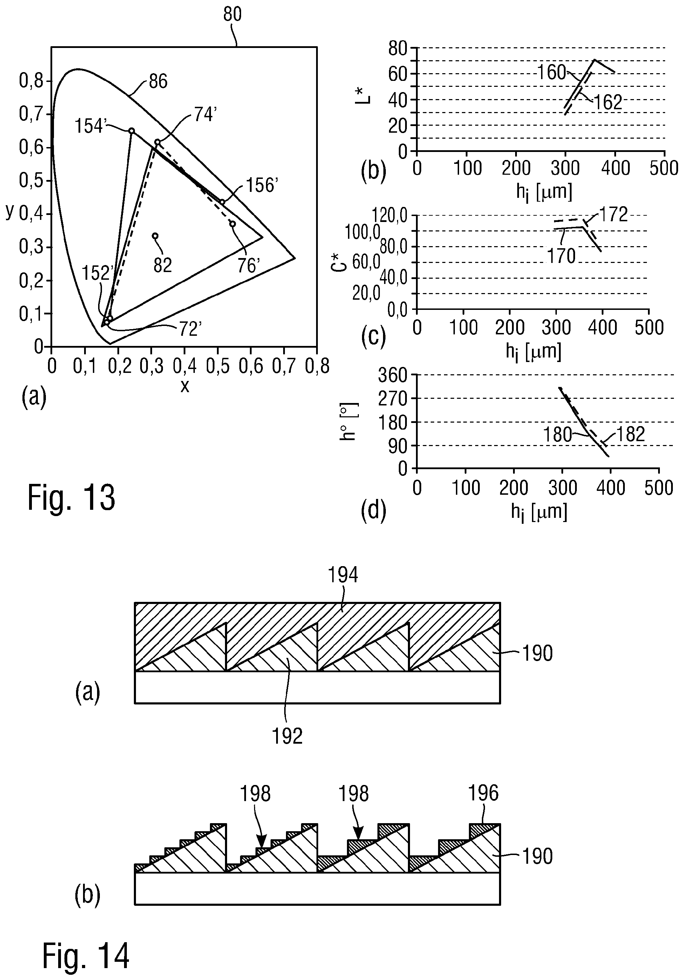

Die Höhe der Treppenstufen ist in Bezug auf die Neigung einzelner Facetten zweckmäßig so angepasst, dass die gewünschte Farbe mit größtmöglicher Intensität erzielt wird. Wie der Darstellung der weiter unten noch genauer erläuterten Fig. 14 zu entnehmen ist, vergrößert sich die Grundfläche bzw. der Flächenanteil einer Treppe bei einer Vergrößerung der Höhe deutlich (für dieselbe Farbe etwa Verdopplung bzw. Vervielfachung). Bei zunehmend kleiner werdenden Treppenbreiten $w_i$ nimmt allerdings der (gewünschte) Interferenzanteil des Lichtes ab und der Streuanteil zu. Auf der anderen Seite nimmt bei zunehmend größer werdenden Treppenbreiten $w_i$ der Anteil des spekular reflektierten Lichts zu. Dazwischen existiert für eine bestimmte Neigung jeweils ein Optimum in Bezug auf die Lichtintensität der Interferenz an den Treppenstufen.

Um optimale Interferenzbedingungen zu erhalten, liegt die Breite der Treppenstufen zweckmäßig im Bereich von 400 nm bis 2 $\mu$m. Bei parallel zur x-y-Ebene angeordneten Treppenstufen ist die Breite $w_i$ der Treppenstufen definiert durch $w_i = h_i/\tan(\beta)$, wobei $\beta$ dem Neigungswinkel der Facette gegenüber der Horizontalen und $h_i$ der Höhe der Treppenstufen entspricht.

Bei einer um 45° geneigten Fläche sind die Breite $w_i$ und die Höhe $h_i$ der Treppenstufen demnach gleich. Für die Ausbildung einer blauen Farbe liegt die (einfache) Treppenhöhe $h_i$ (und entsprechend die Breite $w_i$) bei etwa 150 nm. Bei einer um 15° geneigten Fläche führen Treppenhöhen $h_i$ von 140 nm bis 210 nm (farbabhängig) dagegen zu Treppenbreiten von 522 nm bis 784 nm. Typischerweise werden die Treppenstufen daher bei einem Facetten-Neigungswinkel $\beta$ von mehr als etwa 20° (Schwellwert) für vielfache Werte von m (also m=2 oder größer in Beziehung (IB)) ausgelegt. Je nach Wahl der gewünschten Farbe sowie der gewünschten Treppenbreite $w_i$ kann dieser Wert jedoch für unterschiedliche Bereiche der Feinstruktur auch um einige Grad variieren.

Zurückkommend auf die Darstellung der Fig. 3(a) sind die Treppenstufen 52 in den beiden Teilbereichen 20-A, 20-B beispielhaft mit einer Höhe $h_i$= 175 nm ausgebildet, so dass sich bei einer Einbettung in Dielektrika 34, 36, 38 mit einem Brechungsindex von n=1,5 als die von der Feinstruktur 50 reflektierte Farbe nach Beziehung (IB) ein leuchtendes Grün einer Wellenlänge von etwa 525 nm ergibt.

Wie in Fig. 3(a) dargestellt, sind die Treppenbreiten $w_i$ der Facetten 32 zwar innerhalb jedes Teilbereichs 20-A bzw. 20-B konstant, wegen der unterschiedlichen Steigung der Facetten 32 in den beiden Teilbereichen unterscheiden sich die Treppenbreiten $w_i$ allerdings zwischen den beiden Teilbereichen. Da die Treppenhöhe $h_i$ gleich ist, weisen die Treppenstufen im Bereich 20-B mit den flacheren Facetten eine größere Breite $w_i$ auf als im Bereich 20-A mit den steileren Facetten.

Figur 3(b) zeigt eine Gegenüberstellung des Teilbereichs 20-A mit einem weiteren Teilbereich 20-C des Sicherheitselements 20, in dem die Facetten 32 dieselbe Neigung aufweisen wie im Teilbereich 20-A, aber mit einem anderen Farbeindruck erscheinen. Im Teilbereich 20-C sind die Treppenstufen 52 der Feinstruktur mit einer größeren Höhe $h_i$ ausgebildet, so dass die Interferenzbedingung der Beziehung (IB) für eine größere Lichtwellenlänge erfüllt ist. Konkret sind die Treppenstufen 52 im Teilbereich 20-C beispielsweise mit einer Höhe $h_i$= 210 nm ausgebildet, so dass sich als reflektierte Farbe ein leuchtendes Rot mit einer Wellenlänge von etwa 630 nm ergibt.

In der in Fig. 3(a) und (b) illustrierten Weise kann für jeden Teilbereich des Sicherheitselements 20 ausgehend von der dortigen, durch die Form der nachgestellten Oberflächen vorgegebenen Neigung der Facetten 32 durch geeignete Wahl der Stufenbreiten $w_i$ und der Stufenhöhen $h_i$ eine gewünschte Farbe für diesen Teilbereich eingestellt werden.

Es versteht sich, dass die illustrierenden Darstellungen der Figuren 2 und 3 eine starke Vereinfachung der tatsächlichen Verhältnisse darstellen. Bei einer allgemeinen dreidimensionalen Oberfläche sind die einzelnen Facetten 32 parallel zum lokalen Gradienten der nachzustellenden Oberfläche und senkrecht zu den Höhenlinien der nachzustellenden Oberfläche ausgerichtet.

Dies ist in Fig. 4 illustriert, die eine Aufsicht auf eine nachzustellende gewölbte Oberfläche 40 mit Höhenlinien 42 zeigt. An drei Stellen ist exemplarisch die Orientierung der Facetten 32 anhand des lokalen Gradienten 44 der Oberfläche 40 gezeigt. Nach dem Konstruktionsprinzip der Fig. 2 entspricht der lokale Gradient 44 gerade der lokalen Neigung der Facetten 32 gegen die x-y-Ebene des Sicherheitselements 20.

Zusätzlich ist die Oberfläche 40 in Fig. 4 in Teilbereiche 40-A, 40-B, 40-C unterteilt, in denen die gewölbte Fläche bei der Betrachtung mit unterschiedlichen Farben erscheint. Die Facetten 32 sind in diesen Teilbereichen jeweils mit einer entsprechend abgestimmten farberzeugenden Feinstruktur in Form einer treppenförmigen Bragg-Interferenzstruktur mit geeignet gewählter Stufenbreite $w_i$ und Stufenhöhe $h_i$ versehen, wie im Zusammenhang mit Fig. 3 beschrieben. Da die Farbwirkung für jede Facette einzeln eingestellt werden kann, kann die Oberfläche 40 mit einer hochauflösenden Farbwirkung und mit scharfen Farbübergängen dargestellt werden.

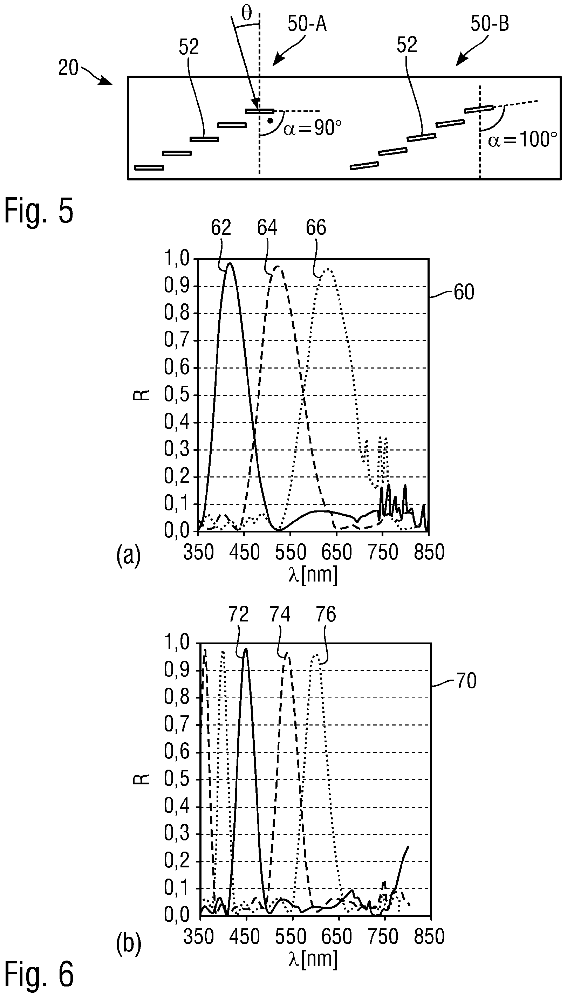

Weitere Eigenschaften und Vorteile der erfindungsgemäßen Kombination von Grob- und Feinstruktur werden nunmehr mit Bezug auf die Figuren 5 bis 13 näher beschrieben.

Figur 5 illustriert zunächst die mögliche Orientierung der Treppenstufen 52 der Bragg-Interferenzstrukturen 50 in einem Sicherheitselement 20 relativ zur z-Richtung. Bei der in der linken Bildhälfte gezeigten Interferenzstruktur 50-A sind die Treppenstufen 52 parallel zur x-y-Ebene angeordnet, der Winkel $\alpha$ zwischen den Treppenstufen und der z-Richtung beträgt daher $\alpha$ = 90°. Im Rahmen der Erfindung können allerdings vorteilhaft auch andere Winkel gewählt werden, insbesondere kann $\alpha$ zwischen 85° und 120° liegen. Bei der in der rechten Bildhälfte gezeigten Interferenzstruktur 50-B beträgt der Winkel $\alpha$ zwischen den Treppenstufen und der z-Richtung beispielsweise $\alpha$ = 100°. Die Wahl des Winkels $\alpha$ bietet einen zusätzlichen Freiheitsgrad in der Einstellung der Farbintensität.

Eine Variation des Winkels $\alpha$ beeinflusst die Ausbildung der Interferenz des Lichtes zwischen benachbarten Treppenstufen dadurch, dass sich der Gangunterschied zwischen den Lichtpfaden verändert.

So ändert sich der Abstand $h_i$ der Bragg-Ebenen in den Beziehung (IB) zu

$$h_i' = t_i * \cos(90° - \alpha) - w_i * \sin(90° - \alpha) \qquad (1)$$

wobei $\alpha$ den Winkel zwischen den Treppenstufen und der z-Richtung, $t_i$ die Höhe der Treppenstufen und $w_i$ die Breite der Treppenstufen darstellt.

Daraus ergibt sich für "verkippte" Treppenstufen, also für Werte von $\alpha$ ungleich 90°, eine modifizierte Beziehung (IB), in der neben dem Abstand $h_i$ der Bragg-Ebenen auch der Einfallswinkel des Lichts $\theta$ korrigiert ist ($\theta' = \theta - (90° - \alpha)$):

$$\lambda/n \; = 2\, h_i'/m * \sin(90° - \theta') \qquad\qquad (IB1)$$

$$= 2\,(\,t_i * \cos(90°- \alpha) - w_i * \sin(90°- \alpha))/m * \sin(\theta + \alpha)).$$

Das weiter unten beschriebene Beispiel von steilen Facetten kann somit vorteilhaft durch Treppenstufen mit $\alpha >$ 90° gebildet werden, ohne dass ein Vielfaches der Höhe $h_i$ der Treppenstufen (m = 2 oder größer in Beziehung (IB)) gewählt werden muss.

Der einfacheren Darstellung halber kann der Winkel $\alpha$ auch als der Winkel gegen die x-y-Ebene definiert werden, so dass für horizontal ausgerichtete Treppenstufen $\alpha_{xy} = 0°$ gilt. Die obige Beziehung kann dann mit

$$\lambda/n = 2\,(\,t_i * \cos(\alpha_{xy}) - w_i * \sin(\alpha_{xy})/m * \sin(\,90° - \theta + \alpha_{xy})) \qquad (IB2)$$

angegeben werden.

Der spektrale Verlauf der Reflexion an 4-stufigen Treppenstrukturen der in Fig. 3 gezeigten Art ist in Fig. 6 dargestellt, wobei ein senkrechter Einfall unpolarisierten Lichts angenommen ist. Die Treppenstufen weisen jeweils konstante Höhe $h_i$ auf und sind mit Aluminium-Metallstreifen 26 einer Schichtdicke von s = 40 nm versehen. Die Reliefstrukturen sind jeweils in Dielektrika 34, 36, 38 mit einem Brechungsindex n = 1,5 eingebettet.

Das Diagramm 60 der Figur 6(a) zeigt die Reflektivität R der Reliefstrukturen als Funktion der Wellenlänge $\lambda$ bei drei unterschiedlichen Stufenhöhen $h_i$, nämlich bei $h_i$ = 140 nm (Reflexionsspektrum 62), $h_i$ = 175 nm (Reflexionsspektrum 64) und $h_i$ = 210 nm (Reflexionsspektrum 66). Die Facetten 32 der Reliefstruktur sind dabei in einem periodischen Abstand von W=6 $\mu$m und gleicher Breite angeordnet. Abhängig von der gewählten Stufenhöhe $h_i$ zeigen die Reflexionsspektren ein ausgeprägtes Maximum im blauen Wellenlängenbereich (Reflexionsspektrum 62), im grünen Wellenlängenbereich (Reflexionsspektrum 64) bzw. im roten Wellenlängenbereich (Reflexionsspektrum 66).

Das Diagramm 70 der Figur 6(b) zeigt die Reflektivität R von Reliefstrukturen mit jeweils etwa doppelt so großen Stufenhöhen $h_i$, nämlich für $h_i$ = 300 nm (Reflexionsspektrum 72), $h_i$ = 360 nm (Reflexionsspektrum 74) und $h_i$ = 400 nm (Reflexionsspektrum 76). Die relevanten Maxima der Reflexionsspektren liegen hier ebenfalls im Blauen (450 nm), Grünen (540 nm) bzw. Roten (600 nm).

Während die Reflexionsspektren der Fig. 6(a) eine Bragg-Reflexion erster Ordnung (m=1 in Beziehung (IB)) an den Treppenstufen 52 zeigen, entstehen die Maxima der Fig. 6(b) durch Bragg-Reflexion zweiter Ordnung an benachbarten Stufen, also m=2 in Beziehung (IB). Der Vergleich der Reflexionskurven der beiden Diagramme 60, 70 zeigt, dass auch bei einer Verdopplung der Stufenhöhe $h_i$ durch konstruktive Interferenz eine Farbausprägung bei der gewünschten Schwerpunktwellenlänge erhalten wird. Die Halbwertsbreite der Maxima ist bei der doppelten Stufenhöhe mit m=2 sogar geringer als bei der einfachen Stufenhöhe mit m=1.

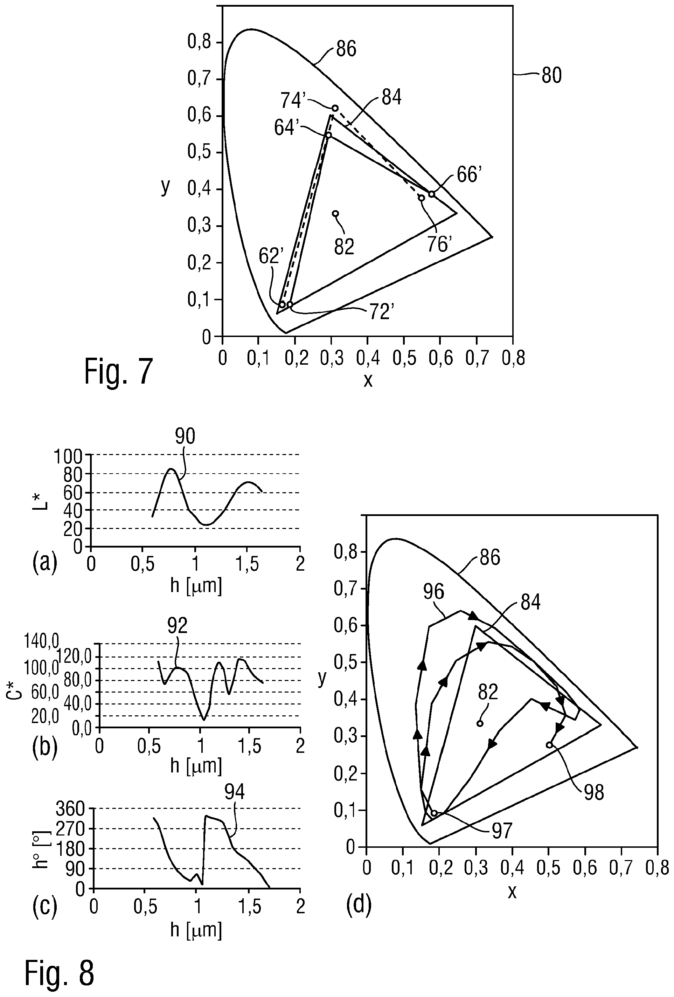

Zur genaueren Untersuchung der Farbeigenschaften der Strukturen der Fig. 6 wurden die berechneten Reflexionsspektren 62-66, 72-76 jeweils mit der Emissionskurve einer D65 Normlampe und der Empfindlichkeit des menschlichen Auges gefaltet. Die so berechneten Farbkoordinaten X, Y, Z wurden in Normfarbwertanteile x,y umgerechnet und sind im CIE-Farbdiagramm 80 der Fig. 7 dargestellt.

Die Farborte der Reflexionsspektren der Fig. 6 sind jeweils mit gestrichenen Bezugszeichen 62', 64', 66' bzw. 72', 74', 76' eingezeichnet. Die durch die Normfarbwertanteile angegebenen Farborte können direkt dem menschlichen Empfinden bei der Farbwahrnehmung zugeordnet werden. Zur Orientierung ist auch der Weißpunkt 82 des Farbschuhs 86 eingezeichnet, sowie ein Dreieck 84, das den üblicherweise mit Bildschirmen darstellbaren Farbraum begrenzt.

Wie aus Fig. 7 durch den Vergleich der Farborte der Reflexionsspektren mit dem Weißpunkt 82 und dem Bildschirm-Dreieck 84 unmittelbar ersichtlich, sind die erfindungsgemäßen treppenförmigen Bragg-Interferenzstrukturen sehr gut geeignet, RGB-Farben hoher Farbsättigung auszubilden. Die Farbausprägung ist sowohl bei Strukturen mit Bragg-Reflexion erster Ordnung (m=1, Farborte 62', 64', 66') als auch bei Strukturen mit Bragg-Reflexion zweiter Ordnung (m=2, Farborte 72', 74', 76') möglich. Der erzeugte Grünton weist bei der doppelten Stufenhöhe ($h_i$ = 360 nm) sogar eine höhere Sättigung auf als der Grünton bei einfacher Stufenhöhe ($h_i$ = 175 nm), wie durch den größeren Abstand des Farborts 74' vom Weißpunkt 82 verglichen mit dem Abstand des Farborts 64' ersichtlich.

Zur weiteren Untersuchung der Farbeigenschaften der erfindungsgemäßen Bragg-Interferenzstrukturen bei kontinuierlicher Änderung der Stufenhöhe wurden für verschiedene Ganghöhen h der Facetten zwischen 0,6 $\mu$m und 1,7 $\mu$m jeweils die Reflexionsspektren und aus diesen die Farbkoordinaten der Reflexion sowohl im CIE-Farbraum als auch im LCh-Farbraum berechnet.

Figur 8 zeigt die Ergebnisse für treppenförmige, mit Aluminium beschichtete Bragg-Interferenzstrukturen mit 4 Treppenstufen, einer Weite W=6$\mu$m und einer Metall-Schichtdicke s=40 nm, jeweils eingebettet in Dielektrika mit n=1,5 bei senkrechtem Lichteinfall. Figur 8(a) zeigt dabei in Abhängigkeit von der Ganghöhe h einer Facette die berechnete Helligkeit L* als Kurve 90, Fig. 8(b) die berechnete Buntheit C* als Kurve 92, und Fig. 8(c) den berechneten Farbton h° als Kurve 94.

Die Kurve 96 der Fig. 8(d) zeigt die Änderung des Farborts im CIE-Farbdiagramm als Funktion der zunehmenden Ganghöhe. Der Anfangspunkt der Kurve 96 bei h=0,6 $\mu$m ist mit Bezugszeichen 97, der Endpunkt bei h=1,7 $\mu$m mit Bezugszeichen 98 bezeichnet. Der Verlauf der Kurve zwischen den Extremwerten mit zunehmender Ganghöhe ist durch Pfeile angezeigt, und auch der Weißpunkt 82 und das Bildschirm-Dreieck 84 sind in dem Farbschuh 86 zur Orientierung eingezeichnet.

Da die Anzahl an Treppenstufen jeweils gleich ist, besteht ein direkter Zusammenhang zwischen der Stufenhöhe $h_i$ der Treppenstufen und der Ganghöhe h der Facette. Wie aus Fig. 8 ersichtlich, können die erfindungsgemäßen Bragg-Treppenstrukturen bei geeigneter Wahl der Stufenhöhe einen sehr großen Bereich des Farbraums abdecken. Mit solchen Treppenstrukturen können also ohne Weiteres auch Echtfarbenbilder oder Echtfarbmotive erzeugt werden.

Weiter zeigt Fig. 8, dass die erfindungsgemäßen Bragg-Interferenzstrukturen in Reflexion eine hohe Helligkeit aufweisen, siehe insbesondere die Helligkeit L* in Fig. 8(a). Der Farbeindruck der Strukturen ist im Wesentlichen durch die Stufenhöhe $h_i$ und den Brechungsindex n des umgebenden Dielektrikums gegeben. Die Stufenbreite $w_i$ und der Abstand W zu den benachbarten Flächenelementen haben dagegen nur einen untergeordneten Einfluss auf den erzeugten Farbeindruck.

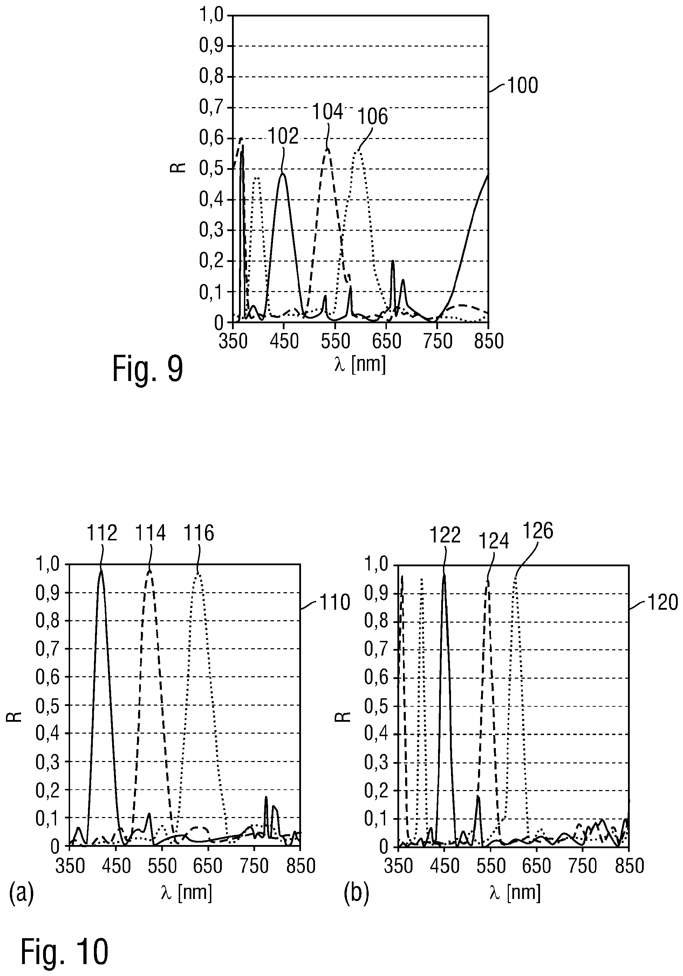

Figur 9 illustriert den Einfluss der Größe der Flächenelemente der Treppenstufen 52 auf das Reflexionsverhalten. Die Reflexionsspektren der Fig. 9 wurden für Bragg-Treppenstrukturen mit den Parametern der Fig. 6(b) berechnet, allerdings für eine Weite W=3 $\mu$m anstelle von W=6 $\mu$m. Die Verkleinerung der Weite impliziert eine entsprechende Verkleinerung der Breite $w_i$ der einzelnen Metallstreifen. Im Diagramm 100 sind die Reflexionsspektren für die Stufenhöhen $h_i$ = 300 nm (Reflexionsspektrum 102), $h_i$ = 360 nm (Reflexionsspektrum 104) und $h_i$ = 400 nm (Reflexionsspektrum 106) gezeigt. Wie aus einem Vergleich der Figuren 9 und 6(b) ersichtlich, ist die Lage der Maxima der Reflexionskurven 102, 104, 106 bzw. 72, 74, 76 nahezu gleich, die Intensität der Reflexion ist durch die schmäleren Metallstreifen allerdings deutlich reduziert.

Eine Bestimmung der LCh-Parameter aus den Reflexionsspektren 102, 104, 106 und ein Vergleich mit den Parametern der Fig. 7 zeigt ebenfalls, dass der Farbton h° und die Farbsättigung C* der Treppenstrukturen der Figuren 9 und 6(b) einander sehr ähnlich sind, und dass im Wesentlichen nur die Helligkeit L* der Strukturen der Fig. 9 aufgrund der kleineren Flächenelemente reduziert ist.

Figur 10 illustriert den Einfluss der Anzahl an Treppenstufen auf die Farbeigenschaften der Reflexion. Die Figur zeigt im Diagramm 110 der Fig. 10(a) die Reflexionsspektren von Bragg-Interferenzstrukturen mit einem 9-stufigen Profil für die unterschiedlichen Stufenhöhen $h_i$ = 140 nm (Reflexionsspektrum 112), $h_i$ = 175 nm (Reflexionsspektrum 114) und $h_i$ = 210 nm (Reflexionsspektrum 116), und im Diagramm 120 der Fig. 10(b) die Reflexionsspektren für $h_i$ = 300 nm (Reflexionsspektrum 122), $h_i$ = 360 nm (Reflexionsspektrum 124) und $h_i$ = 400 nm (Reflexionsspektrum 126). Die anderen Parameter der Interferenzstrukturen entsprechen denen der Fig. 6.

Ein Vergleich der Figuren 10 und 6 zeigt eine annähernd unveränderte Spektralcharakteristik für die verschiedenen Stufenhöhen, lediglich die Halbwertsbreite der Spektren ist bei der höheren Stufenanzahl geringer. Eine Farbgebung durch eine Überlagerung mit Bragg-Interferenzstrukturen kann somit ohne Weiteres mit einer unterschiedlich großen Anzahl an Stufen und damit auch für unterschiedlich steile Facetten erfolgen.

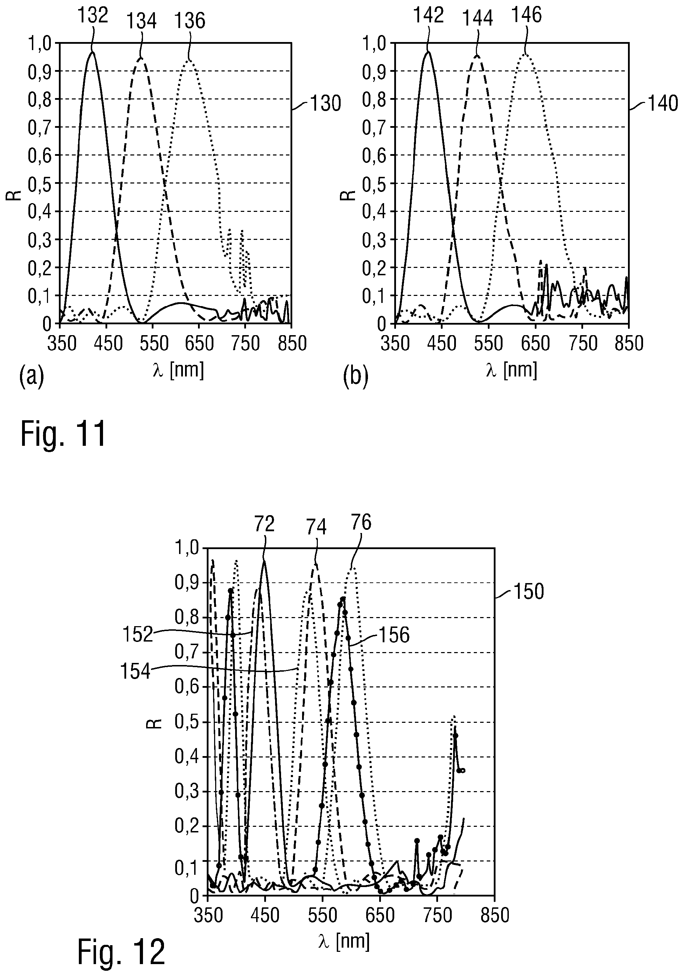

Der Einfluss einer unterschiedlichen Dicke s der Metallbeschichtung auf die Reflexionseigenschaften ist in Fig. 11 dargestellt. Ausgehend von den Bragg-Interferenzstrukturen der Fig. 6(a), bei der die Schichtdicke der Aluminiumbeschichtung der Treppenstufen s=40 nm beträgt, wurden ergänzend Reflexionsspektren für Strukturen mit einer Aluminiumschichtdicke von s=20 nm (dargestellt in Fig. 11(a)) und s=80 nm (dargestellt in Fig. 11(b)) berechnet. Die restlichen Parameter sind identisch zu denen der Strukturen der Fig. 6(a).

Im Diagramm 130 bezeichnen die Bezugszeichen 132, 134, 136 die Reflexionsspektren für $h_i$ = 140 nm, $h_i$ = 175 nm und $h_i$ = 210 nm bei s=20 nm, und im Diagramm 140 die Bezugszeichen 142, 144, 146 die entsprechenden Reflexionsspektren für $h_i$ = 140 nm, $h_i$ = 175 nm und $h_i$ = 210 nm bei s=80 nm. Ein Vergleich der Figuren 6(a), 11(a) und 11(b) zeigt, dass die Wahl der Schichtdicke der Aluminiumschicht kaum Einfluss auf die Farbcharakteristik hat.

Schließlich wurde auch die Winkelabhängigkeit des erzeugten Farbtons am Beispiel einer 4-stufigen Bragg-Interferenzstruktur mit Aluminiumbeschichtung näher untersucht. Das Diagramm 150 der Fig. 12 zeigt einerseits die bereits in Fig. 6(b) dargestellten Reflexionsspektren 72, 74, 76 für Bragg-Interferenzstrukturen mit den Stufenhöhen $h_i$ = 300 nm, 360 nm bzw. 400 nm für einen Lichteinfallswinkel von $\theta$ = 0°. Darüber hinaus sind Reflexionsspektren 152, 154, 156 für dieselben Stufenhöhen für einen Lichteinfallswinkel von $\theta$ = 20° eingezeichnet. Das Diagramm 150 zeigt deutlich, dass durch eine Änderung des Lichteinfallswinkels um 20°, bzw. durch ein Kippen der Strukturen um 20°, die Maxima der Reflexionsspektren kaum verschoben werden.

Die nur schwache Winkelabhängigkeit des Farbeindrucks ergibt sich auch aus Fig. 13, die im CIE-Farbdiagramm der Fig. 13(a) die Farborte 72', 74', 76' bei einem Lichteinfallswinkel von $\theta$ = 0° mit den Farborten 152', 154', 156' bei einem Lichteinfallswinkel von $\theta$ = 20° vergleicht. Daneben zeigen Fig. 13(b) die im LCh-Farbraum berechneten Helligkeiten L* als Kurve 160 ($\theta$ = 0°) bzw. Kurve 162 ($\theta$ = 20°), Fig. 13(c) die Buntheit C* als Kurve 170 ($\theta$ = 0°) bzw. Kurve 172 ($\theta$ = 20°) und Fig. 13(d) den Farbton h° als Kurve 180 ($\theta$ = 0°) bzw. Kurve 182 ($\theta$ = 20°).

Die Figuren 12 und 13 belegen, dass die erfindungsgemäßen Bragg-Interferenzstrukturen 50 nicht besonders für unterschiedlich geneigte Flächenelemente der Grobstruktur 30 angepasst werden müssen, um einen einheitlichen Farbton in Reflexion zu erzeugen. Diese hohe Winkeltoleranz gewährleistet außerdem eine farbtreue Wiedergabe auch bei diffusen Lichtquellen.

Die Winkeltoleranz in Bezug auf den Farbeindruck gilt für den Fall, dass der Abstand der Bragg-Ebenen nicht verändert wird. Dies ist zumindest für größere Änderungen des Winkels $\alpha$ zwischen den Treppenstufen und der z-Richtung nicht mehr gegeben.

Bei der Herstellung erfindungsgemäßer Sicherheitselemente kann beispielsweise wie folgt vorgegangen werden. Das Original einer treppenförmigen Bragg-Interferenzstruktur kann beispielsweise durch lithographische Verfahren hergestellt werden. In einer Variante kann eine sägezahnförmige Fresnelstruktur als Grobstruktur 190 mit einem Laserwriter belichtet werden. Die Strukturweite der einzelnen Flächenelemente 192 liegt dabei typischerweise bei etwa 5 µm. In einem Folgeschritt wird diese Grobstruktur nach dem Entwickeln beispielsweise in Ormocer umkopiert und mit einem Negativ-Photolack 194 überzogen, wie in Fig. 14(a) gezeigt.

Anschließend wird eine gewünschte überlagerte treppenförmige Feinstruktur 196 passergenau zu der Fresnel-Grobstruktur 190 mit einer Elektronstrahlbelichtungsanlage belichtet. Hierzu können Grauwert-Belichtungsverfahren eingesetzt werden, wie sie auch bei der Herstellung von Blaze-Gittern verwendet werden, da die in Fig. 14(b) illustrierten Stufen 198 der Geometrie einzelner Blaze-Gitter entsprechen, welche sich auf geneigten Flächenelementen der Grobstruktur befinden. Nach dem Entfernen des belichteten Photolacks 194 entsteht die gewünschte Überlagerung der Fresnel-Grobstruktur 190 mit der Bragg-Feinstruktur 196, wie in Fig. 14(b) dargestellt.

Alternativ können solche Kombinationsstrukturen auch mit einem Laserwriter, der auf einem 2-Photonenabsorptionsprozess basiert, direkt in einem einzigen Arbeitsgang belichtet werden. Eine weitere, allerdings aufwendigere Alternative ist eine Grauwertbelichtung der überlagerten Grob- und Feinstruktur mit einer Elektronstrahlbelichtungsanlage in einem einzigen Belichtungsprozess. In einer weiteren Alternative kann die Grauwertbelichtung in einem zweistufigen Belichtungsprozess erfolgen, bei dem zunächst die Grobstruktur und in einem zweiten Belichtungsprozess die Feinstruktur mit dem Elektronenstrahl geschrieben wird.

Unabhängig vom Herstellungsverfahren kann das so hergestellte Original galvanisch oder durch ein Nanoimprint-Verfahren umkopiert werden. Weiterhin ist eine Vielfachanordnung des Originalmusters durch Heißprägen oder durch Nanoimprint auf einer Matrize zweckmäßig, um einen Prägezylinder für die spätere Vervielfältigung herzustellen. Solche Prägezylinder erlauben die kontinuierliche Vervielfältigung der Originalstruktur in UV-Lack auf Folien in einem Rolle-zu-Rolle Prozess. Von großem Vorteil ist dabei, dass die erfindungsgemäßen treppenförmigen Bragg-Interferenzstrukturen ein geringes Aspektverhältnis aufweisen. Daher treten Lackanhaftungen im Prägezylinder, anders als bei der Herstellung anderer bekannter Nanostrukturen, kaum auf. Dies senkt die Produktionskosten erheblich und erhöht den Durchsatz bei der Fertigung.

Schließlich wird die Prägestruktur dieser Folien mit einer Metallschicht überzogen. Hier kommen bevorzugt Elektronenstrahlbedampfung, thermisches Verdampfen oder Sputtern in Frage. Als Metalle eignen sich besonders Al, Ag, Au, Ni oder Cr und Legierungen von diesen Metallen. Die Dicke der Metallbeschichtung liegt im Bereich von etwa 10 nm bis etwa 150 nm. Alternativ können die Prägestrukturen auch metallisch bedruckt oder mit metallischen Flakes überzogen sein.

Anstelle einer Metallisierung kann auf den Prägestrukturen auch eine Beschichtung aus einem Material mit hohem Brechungsindex gebildet sein. Als hochbrechendes Beschichtungsmaterialien kommen insbesondere ZnS, ZnO, ZnSe, $SiN_x$, $SiO_x$, $Cr_2O_3$, $Nb_2O_5$, $Ta_2O_5$, $Ti_xO_x$ und $ZrO_2$ in Frage. Zudem können alternativ auch Halbmetalle wie Si oder Ge als Beschichtungsmaterialien verwendet werden.

Die metallisierte oder mit einem hochbrechenden Material oder einem Halbmetall beschichtete Oberfläche wird anschließend vorteilhaft mit einer transparenten Schutzschicht überzogen bzw. mit einer Deckfolie kaschiert, um sie später vor Umwelteinflüssen zu schützen.

Weiterhin ist es möglich, das oben beschriebene Original mit weiteren Originalstrukturen durch z.B. Nanoimprint-Verfahren passergenau zusammenzusetzen. Dieses Verfahren eignet sich insbesondere für die Kombination dieser Bragg-Interferenzstrukturen mit weiteren bekannten Strukturen wie Reliefhologrammen, Mikrospiegel- oder Nanostrukturen.

Für die Herstellung der Treppenstrukturen mit mehreren Stufen kann auch ein mehrstufiger Ätzprozess oder eine mehrstufige Prägematrize eingesetzt werden.

In einer weiteren Variante können Bereiche der Prägestruktur vor dem Metallisierungsprozess mit Waschfarbe bedruckt werden, welche dann (nach dem Aufbringen der Metallisierung) bei einem Waschschritt zusammen mit den darüber aufgebrachten Schichtbereichen der Metallisierung abgewaschen wird. Dadurch lassen sich Motive mit optisch neutralen bzw. transparenten Bereichen erzeugen.

Bezugszeichenliste

| | |
|---|---|
| 10 | Banknote |
| 12 | Transferelement |
| 14 | sich herauswölbendes Echtfarb-Portrait |
| 16 | Sicherheitsfaden |
| 18 | sich herauswölbender Stern |
| 20 | Sicherheitselement |
| 20-A, 20-B, 20-C | Teilbereiche |
| 22 | reflektiver Flächenbereich |
| 24 | Prägelack |
| 26 | Metallisierung |
| 28 | Reliefstruktur |
| 30 | Grobstruktur |
| 32 | gerichtet reflektierende Facetten |
| 34, 36, 38 | dielektrische Schichten |
| 40 | dreidimensionale Darstellung |
| 40-A, 40-B, 40-C | Sicherheitselement |
| 42 | Höhenlinien |
| 44 | Gradient |
| 50, 50-A, 50-B | farberzeugende Feinstruktur |
| 52 | metallisierte Treppenstufen |
| 60 | Diagramm |
| 62, 64, 66 | Reflexionsspektren |
| 62', 64', 66' | Farborte |
| 70 | Diagramm |
| 72, 74, 76 | Reflexionsspektren |
| 72', 74', 76' | Farborte |
| 80 | CIE-Farbdiagramm |
| 82 | Weißpunkt |
| 84 | Bildschirm-Dreieck |
| 86 | Farbschuh |
| 90, 92, 94, 96 | Kurven |
| 97, 98 | Anfangs- und Endpunkt |
| 100 | Diagramm |
| 102, 104, 106 | Reflexionsspektren |
| 110 | Diagramm |
| 112, 114, 116 | Reflexionsspektren |
| 120 | Diagramm |
| 122, 124, 126 | Reflexionsspektren |
| 130 | Diagramm |
| 132, 134, 136 | Reflexionsspektren |
| 140 | Diagramm |
| 142, 144, 146 | Reflexionsspektren |
| 150 | Diagramm |
| 152, 154, 156 | Reflexionsspektren |
| 152', 154', 156' | Farborte |
| 160, 162 | Helligkeitskurven |
| 170, 172 | Buntheitskurven |
| 180, 182 | Farbtonkurven |
| 190 | Grobstruktur |
| 192 | Flächenelemente |
| 194 | Photolack |
| 196 | Feinstruktur |
| 198 | Treppenstufen |

**Patentansprüche**

1. Sicherheitselement (20) zur Absicherung von Wertgegenständen, mit einem reflektiven Flächenbereich (22), dessen Ausdehnung eine x-y-Ebene definiert und der bei Betrachtung in reflektiertem Licht eine mehrfarbige dreidimensionale Darstellung (40) erzeugt, wobei:

- der reflektive Flächenbereich (22) eine Grobstruktur (30) für die Erzeugung der dreidimensionalen Darstellung (40) und eine die Grobstruktur überlagernde Feinstruktur (50) für die Erzeugung des mehrfarbigen Erscheinungsbilds der Darstellung (40) umfasst, wobei
- die Grobstruktur (30) eine Vielzahl von gerichtet reflektierenden Facetten (32) umfasst, die so orientiert sind, dass der reflektive Flächenbereich (22) für einen Betrachter in Form der dreidimensionalen Darstellung (40) mit einer gegenüber seiner tatsächlichen Raumform vor- und/oder zurückspringenden Oberfläche wahrnehmbar ist, **dadurch gekennzeichnet, dass**
- die Feinstruktur (50) durch eine treppenförmige Bragg-Interferenzstruktur mit Treppenstufen (52) gebildet ist, auf denen eine reflektierende oder reflexionserhöhende Beschichtung (26) ausgebildet ist, wobei die Treppenstufen (52) den gerichtet reflektierenden Facetten (32) der Grobstruktur (30) überlagert sind und bei Betrachtung durch Bragg-Interferenz an benachbarten Treppenstufen eine Farbwirkung erzeugen, wobei eine bereichsweise (20-A, 20-C) unterschiedliche Höhe der Treppenstufen (52) in dem reflektiven Flächenbereich (22) bereichsweise (40-A, 40-B, 40-C) unterschiedliche Farben der dreidimensionalen Darstellung erzeugt.

2. Sicherheitselement nach Anspruch 1, **dadurch gekennzeichnet, dass** die Grobstruktur (30) und die Feinstruktur (50) des reflektiven Flächenbereichs (22) zwischen transparente, insbesondere transparente dielektrische Schichten eingebettet sind.

3. Sicherheitselement nach Anspruch 1 oder 2, **dadurch gekennzeichnet, dass** die Facetten (32) der Grobstruktur (30) in zumindest einer Raumrichtung der x-y-Ebene eine Weite zwischen 2 $\mu$m und 30 $\mu$m, insbesondere zwischen 4 $\mu$m und 10 $\mu$m aufweisen.

4. Sicherheitselement nach wenigstens einem der Ansprüche 1 bis 3, **dadurch gekennzeichnet, dass** die Facetten (32) der Grobstruktur (30) aperiodisch angeordnet sind.

5. Sicherheitselement nach wenigstens einem der Ansprüche 1 bis 4, **dadurch gekennzeichnet, dass** die der Grobstruktur (30) überlagerten Treppenstufen (52) innerhalb jeder der Facetten gleiche Höhe aufweisen.

6. Sicherheitselement nach wenigstens einem der Ansprüche 1 bis 5, **dadurch gekennzeichnet, dass** den Facetten (32) der Grobstruktur (30) in den farbigen Bereichen eine Bragg-Interferenzstruktur mit 2 bis 20 Treppenstufen, insbesondere 2 bis 10 Treppenstufen überlagert ist.

7. Sicherheitselement nach wenigstens einem der Ansprüche 1 bis 6, **dadurch gekennzeichnet, dass** die Höhe der Treppenstufen (52) zwischen 100 nm und 600 nm, vorzugsweise zwischen 125 nm und 520 nm und insbesondere zwischen 150 nm und 425 nm liegt.

8. Sicherheitselement nach wenigstens einem der Ansprüche 1 bis 7, **dadurch gekennzeichnet, dass** die Höhe der Treppenstufen (52) bei flacheren Facetten (32) mit einer Neigung unterhalb eines vorgegebenen Schwellwerts unterhalb von 275 nm und bei steileren Facetten oberhalb des Schwellwerts oberhalb von 275 nm liegt.

9. Sicherheitselement nach wenigstens einem der Ansprüche 1 bis 8, **dadurch gekennzeichnet, dass** die Treppenstufen (52) mit der z-Achse einen Winkel $\alpha$ zwischen 85° und 120° einschließen, insbesondere einen Winkel $\alpha$ ungleich 90° einschließen.

10. Sicherheitselement nach wenigstens einem der Ansprüche 1 bis 9, **dadurch gekennzeichnet, dass** die reflektierende oder reflexionserhöhende Beschichtung (26) der Treppenstufen (52) aus einer Metallisierung, insbesondere aus Al, Ag, Au, Ni, Cr oder einer Legierung dieser Metalle besteht.

11. Sicherheitselement nach wenigstens einem der Ansprüche 1 bis 10, **dadurch gekennzeichnet, dass** die Dicke der Metallisierung zwischen 8 nm und 150 nm, insbesondere zwischen 15 nm und 60 nm liegt.

12. Sicherheitselement nach wenigstens einem der Ansprüche 1 bis 9, **dadurch gekennzeichnet, dass** die reflektierende oder reflexionserhöhende Beschichtung (26) der Treppenstufen aus einem Material mit hohem Brechungsindex, insbesondere aus $ZnS$, $ZnO$, $ZnSe$, $SiN_x$, $SiO_x$, $Cr_2O_3$, $Nb_2O_5$, $Ta_2O_5$, $Ti_xO_x$ oder $ZrO_2$, oder aus einem Halbmetall, insbesondere aus Si oder Ge, besteht.

13. Sicherheitselement nach wenigstens einem der Ansprüche 1 bis 12, **dadurch gekennzeichnet, dass** die Breite der Treppenstufen (52) zwischen 400 nm und 2 $\mu$m, insbesondere zwischen 600 nm und 1 $\mu$m liegt.

14. Sicherheitselement nach wenigstens einem der Ansprüche 1 bis 13, **dadurch gekennzeichnet, dass** die treppenförmige Bragg-Interferenzstruktur in den farbigen Bereichen des reflektiven Flächenbereichs (22) eine im LCh-Farbraum angegebene Chroma C* von mehr als 40, insbesondere von mehr als 60 erzeugt.

15. Datenträger (10) mit einem Sicherheitselement (20) nach einem der Ansprüche 1 bis 14, wobei der Datenträger insbesondere ein Wertdokument oder eine Ausweiskarte ist.

16. Verfahren zur Herstellung eines Sicherheitselements (20) nach einem der Ansprüche 1 bis 14, bei dem

- ein reflektiver Flächenbereich (22) mit einer Grobstruktur (30) für die Erzeugung der dreidimensionalen Darstellung (40) und einer die Grobstruktur überlagernden Feinstruktur (50) für die Erzeugung des mehrfarbigen Erscheinungsbilds der Darstellung (40) erzeugt wird,
- die Grobstruktur (30) mit einer Vielzahl von gerichtet reflektierenden Facetten (32) ausgebildet wird, die so orientiert werden, dass der reflektive Flächenbereich (22) für einen Betrachter in Form der dreidimensionalen Darstellung (40) mit einer gegenüber seiner tatsächlichen Raumform vor- und/oder zurückspringenden Oberfläche wahrnehmbar ist, **dadurch gekennzeichnet, dass**
- die Feinstruktur (50) durch eine treppenförmige Bragg-Interferenzstruktur mit Treppenstufen (52) gebildet wird, die den gerichtet reflektierenden Facetten (32) der Grobstruktur (30) überlagert werden und die bei Betrachtung durch Bragg-Interferenz an benachbarten Treppenstufen eine Farbwirkung erzeugen, wobei die Treppenstufen (52) bereichsweise mit unterschiedlicher Höhe ausgebildet werden, um in dem reflektiven Flächenbereich (22) bereichsweise unterschiedliche Farben der dreidimensionalen Darstellung (40) zu erzeugen, und wobei auf den Treppenstufen (52) eine reflektierende oder reflexionserhöhende Beschichtung (26) ausgebildet wird.

## Claims

1. Security element (20) for safeguarding valuable objects, having a reflective surface region (22), the extent of which defines an x-y plane and which, when viewed in reflected light, generates a multi-coloured three-dimensional representation (40), wherein:

- the reflective surface region (22) comprises a coarse structure (30) for the generation of the three-dimensional representation (40) and a fine structure (50) superimposed on the coarse structure for the generation of the multi-coloured appearance of the representation (40), wherein
- the coarse structure (30) comprises a plurality of directionally reflective facets (32) oriented in such a way that the reflective surface region (22) is perceptible to an observer in the form of the three-dimensional representation (40) with a surface which protrudes and/or is set back in relation to the actual spatial shape of said surface region, **characterized in that**
- the fine structure (50) is formed by a staircase-shaped Bragg interference structure having steps (52) on which a reflective or reflection-enhancing coating (26) is formed, wherein the steps (52) are superimposed on the directionally reflective facets (32) of the coarse structure (30) and generate a colour effect when viewed as a result of Bragg interference at adjacent steps, wherein a regionally (20-A, 20-C) different height of the steps (52) in the reflective surface region (22) generates regionally (40-A, 40-B, 40-C) different colours of the three-dimensional representation.

2. Security element according to Claim 1, **characterized in that** the coarse structure (30) and the fine structure (50) of the reflective surface region (22) are embedded between transparent layers, in particular transparent dielectric layers.

3. Security element according to Claim 1 or 2, **characterized in that** the facets (32) of the coarse structure (30) have a width of between 2 $\mu$m and 30 $\mu$m, in particular between 4 $\mu$m and 10 $\mu$m, in at least one spatial direction of the x-y plane.

4. Security element according to at least one of Claims 1 to 3, **characterized in that** the facets (32) of the coarse structure (30) are arranged aperiodically.

5. Security element according to at least one of Claims 1 to 4, **characterized in that** the steps (52) superimposed on the coarse structure (30) have the same height within each of the facets.

6. Security element according to at least one of Claims 1 to 5, **characterized in that** a Bragg interference structure having 2 to 20 steps, in particular 2 to 10 steps, is superimposed on the facets (32) of the coarse structure (30) in the coloured regions.

7. Security element according to at least one of Claims 1 to 6, **characterized in that** the height of the steps (52) is between 100 nm and 600 nm, preferably between 125 nm and 520 nm and in particular between 150 nm and 425 nm.

8. Security element according to at least one of Claims 1 to 7, **characterized in that** the height of the steps (52) is below 275 nm in the case of shallower facets (32) having an inclination below a predefined threshold value and above 275 nm in the case of steeper facets above the threshold value.

9. Security element according to at least one of Claims 1 to 8, **characterized in that** the steps (52) form an angle $\alpha$ of between 85° and 120°, in particular form an angle $\alpha$ not equal to 90°, with the z-axis.

10. Security element according to at least one of Claims 1 to 9, **characterized in that** the reflective or reflection-enhancing coating (26) of the steps (52) consists of a metallization, in particular of Al, Ag, Au, Ni, Cr or an alloy of these metals.

11. Security element according to at least one of Claims 1 to 10, **characterized in that** the thickness of the metallization is between 8 nm and 150 nm, in particular between 15 nm and 60 nm.

12. Security element according to at least one of Claims 1 to 9, **characterized in that** the reflective or reflection-enhancing coating (26) of the steps consists of a material having a high refractive index, in particular of $ZnS$, $ZnO$, $ZnSe$, $SiN_x$, $SiO_x$, $Cr_2O_3$, $Nb_2O_5$, $Ta_2O_5$, $Ti_xO_x$ or $ZrO_2$, or of a semimetal, in particular of Si or Ge.

13. Security element according to at least one of Claims 1 to 12, **characterized in that** the width of the steps (52) is between 400 nm and 2 $\mu$m, in particular between 600 nm and 1 $\mu$m.

14. Security element according to at least one of Claims 1 to 13, **characterized in that** the staircase-shaped Bragg interference structure, in the coloured regions of the reflective surface region (22), generates a chroma C* - specified in the LCh colour space - of more than 40, in particular of more than 60.

15. Data carrier (10) comprising a security element (20) according to any of Claims 1 to 14, wherein the data carrier is in particular a valuable document or an identity card.

16. Method for producing a security element (20) according to any of Claims 1 to 14, wherein

- a reflective surface region (22) is produced with a coarse structure (30) for the generation of the three-dimensional representation (40) and a fine structure (50) superimposed on the coarse structure for the generation of the multi-coloured appearance of the representation (40),
- the coarse structure (30) is formed with a plurality of directionally reflective facets (32) oriented in such a way that the reflective surface region (22) is perceptible to an observer in the form of the three-dimensional representation (40) with a surface which protrudes and/or is set back in relation to the actual spatial shape of said surface region, **characterized in that**
- the fine structure (50) is formed by a staircase-shaped Bragg interference structure having steps (52) which are superimposed on the directionally reflective facets (32) of the coarse structure (30) and which generate a colour effect when viewed as a result of Bragg interference at adjacent steps, wherein the steps (52) are formed regionally with different heights in order to generate regionally different colours of the three-dimensional representation (40) in the reflective surface region (22), and wherein a reflective or reflection-enhancing coating (26) is formed on the steps (52).

**Revendications**

1. Élément de sécurité (20) pour la sécurisation d'objets de valeur, présentant une zone surfacique réfléchissante (22), dont l'extension définit un plan x-y et qui génère, lors de l'observation dans la lumière réfléchie, une représentation (40) tridimensionnelle multicolore :

- la zone surfacique réfléchissante (22) comprenant une structure grossière (30) pour la génération de la représentation (40) tridimensionnelle et une structure fine (50) superposée à la structure grossière pour la génération de l'aspect multicolore de la représentation (40),

- la structure grossière (30) comprenant une multitude de facettes (32) réfléchissant de manière dirigée, qui sont orientées de telle sorte que la zone surfacique réfléchissante (22) peut être observée par un observateur sous la forme de la représentation (40) tridimensionnelle avec une surface en saillie et/ou en retrait par rapport à sa forme spatiale effective, **caractérisé en ce que**

- la structure fine (50) est formée par une structure d'interférence de Bragg en forme d'escalier présentant des marches (52) sur lesquelles est réalisé un revêtement (26) réfléchissant ou augmentant la réflexion, les marches (52) étant superposées aux facettes (32) réfléchissant de manière dirigée de la structure grossière (30) et générant, lors de l'observation, par l'interférence de Bragg, au niveau de marches adjacentes, un effet de couleur, une hauteur différente par zones (20-A, 20-C) des marches (52) générant dans la zone surfacique réfléchissante (22) des couleurs différentes par zones (40-A, 40-B, 40-C) de la représentation tridimensionnelle.

2. Élément de sécurité selon la revendication 1, **caractérisé en ce que** la structure grossière (30) et la structure fine (50) de la zone surfacique réfléchissante (22) sont incorporées entre des couches transparentes, en particulier diélectriques transparentes.

3. Élément de sécurité selon la revendication 1 ou 2, **caractérisé en ce que** les facettes (32) de la structure grossière (30) présentent, dans au moins une direction spatiale du plan x-y, une largeur située entre 2 $\mu$m et 30 $\mu$m, en particulier entre 4 $\mu$m et 10 $\mu$m.

4. Élément de sécurité selon au moins l'une des revendications 1 à 3, **caractérisé en ce que** les facettes (32) de la structure grossière (30) sont agencées de manière apériodique.

5. Élément de sécurité selon au moins l'une des revendications 1 à 4, **caractérisé en ce que** les marches (52) superposées à la structure grossière (30) présentent la même hauteur à l'intérieur de chacune des facettes.

6. Élément de sécurité selon au moins l'une des revendications 1 à 5, **caractérisé en ce que** les facettes (32) de la structure grossière (30) dans les zones colorées sont superposées d'une structure d'interférence de Bragg présentant 2 à 20 marches, en particulier 2 à 10 marches.

7. Élément de sécurité selon au moins l'une des revendications 1 à 6, **caractérisé en ce que** la hauteur des marches (52) est située entre 100 nm et 600 nm, de préférence entre 125 nm et 520 nm et en particulier entre 150 nm et 425 nm.

8. Élément de sécurité selon au moins l'une des revendications 1 à 7, **caractérisé en ce que** la hauteur des marches (52), pour des facettes (32) plus plates présentant une inclinaison inférieure à une valeur seuil spécifiée, est inférieure à 275 nm et, pour des facettes plus pentues au-dessus de la valeur seuil, est supérieure à 275 nm.

9. Élément de sécurité selon au moins l'une des revendications 1 à 8, **caractérisé en ce que** les marches (52) forment, avec l'axe z, un angle $\alpha$ entre 85° et 120°, en particulier un angle $\alpha$ différent de 90°.

10. Élément de sécurité selon au moins l'une des revendications 1 à 9, **caractérisé en ce que** le revêtement (26) réfléchissant ou augmentant la réflexion des marches (52) est constitué d'une métallisation, en particulier en Al, Ag, Au, Ni, Cr ou en un alliage de ces métaux.

11. Élément de sécurité selon au moins l'une des revendications 1 à 10, **caractérisé en ce que** l'épaisseur de la métallisation est située entre 8 nm et 150 nm, en particulier entre 15 nm et 60 nm.

12. Élément de sécurité selon au moins l'une des revendications 1 à 9, **caractérisé en ce que** le revêtement (26) réfléchissant ou augmentant la réflexion des marches est constitué d'un matériau présentant un indice de réfraction élevé, en particulier de $ZnS$, $ZnO$, $ZnSe$, $SiN_x$, $SiO_x$, $Cr_2O_3$, $Nb_2O_5$, $Ta_2O_5$, $Ti_xO_x$ ou $ZrO_2$, ou d'un semimétal, en particulier de Si ou Ge.

13. Élément de sécurité selon au moins l'une des revendications 1 à 12, **caractérisé en ce que** la largeur des marches (52) est située entre 400 nm et 2 $\mu$m, en particulier entre 600 nm et 1 $\mu$m.

14. Élément de sécurité selon au moins l'une des revendications 1 à 13, **caractérisé en ce que** la structure d'interférence de Bragg en forme d'escalier génère, dans les zones colorées de la zone surfacique réfléchissante (22), un Chroma C*, donné dans l'espace couleur LCh, supérieur à 40, en particulier supérieur à 60.

15. Support de données (10) présentant un élément de sécurité (20) selon l'une des revendications 1 à 14, le support de données étant en particulier un document de valeur ou une carte d'identité.

16. Procédé de fabrication d'un élément de sécurité (20) selon l'une des revendications 1 à 14, dans lequel

- une zone surfacique réfléchissante (22) présentant une structure grossière (30) pour la génération de la représentation (40) tridimensionnelle et une structure fine (50) superposée à la structure grossière pour la génération de l'aspect multicolore de la représentation (40) est générée,
- la structure grossière (30) est réalisée avec une multitude de facettes (32) réfléchissant de manière dirigée, qui sont orientées de telle sorte que la zone surfacique réfléchissante (22) peut être observée par un observateur sous la forme de la représentation (40) tridimensionnelles présentant une surface en saillie et/ou en retrait par rapport à sa forme spatiale effective, **caractérisé en ce que**
- la structure fine (50) est formée par une structure d'interférence de Bragg en forme d'escalier, présentant des marches (52) qui sont superposées aux facettes (32), réfléchissant de manière dirigée, de la structure grossière (30) et qui génèrent, lors de l'observation par interférence de Bragg, au niveau de marches adjacentes, un effet de couleur, les marches (52) étant réalisées par zones avec une hauteur différente, afin de générer, dans la zone surfacique réfléchissante (22), par zones, des couleurs différentes de la représentation (40) tridimensionnelle et un revêtement (26) réfléchissant ou augmentant la réflexion étant réalisé sur les marches (52).

Fig. 1

Fig. 2

Fig. 3

Fig. 4

Fig. 5

Fig. 6

Fig. 7

Fig. 8

Fig. 9

(a)

(b)

Fig. 10

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- WO 2014060089 A2
- DE 102011101635 A1
- EP 3184318 A
- WO 2019180461 A1
- WO 9721121 A1
- FR 3019497 A1
- WO 2016141422 A1
- WO 2018166653 A1
- DE 102012110630 A1
- WO 2021063126 A1
- DE 102014018551 A1